# EUROPEAN PATENT APPLICATION

(11) **EP 4 718 119 A1**
(43) Date of publication of application: **01.04.2026**
(21) Application number: 24810305.3
(22) Date of filing: 17.05.2024
(51) Int. Cl.: G01S 17/48

(54) **DISTANCE DETECTION APPARATUS AND SELF-PROPELLED DEVICE**

(30) Priority: 23.05.2023 CN 202310588156
(71) Applicant: Beijing Roborock Technology Co., Ltd., Beijing 102206 (CN)
(72) Inventor: ZHANG, Wei, Beijing 102206 (CN)
(74) Representative: Maiwald GmbH
(86) International application number: PCT/CN2024/093799
(87) International publication number: WO 2024/240059

(57) **Abstract**

A distance detection apparatus and a self-propelled device (100). The distance detection apparatus comprises: an emitting light source (210), a receiving lens (220), a detection assembly (230), and a controller. The receiving lens (220) and the emitting light source (210) are arranged at intervals, and the detection assembly (230) is located near a focal plane of the receiving lens (220). The emitting light source (210) is configured to emit detection light having a divergence angle to a target object (300). The detection assembly (230) is configured to receive reflected light information reflected by the target object (300) and passing through the receiving lens (220), The controller is electrically connected to the detection assembly (230), and the controller is configured to determine a measurement distance of the target object (300) according to the reflected light information received by the detection assembly (230).

## Description

The present disclosure claims priority to Chinese Patent Application No. 202310588156.5, filed with China National Intellectual Property Administration on May 23, 2023 and entitled "DISTANCE DETECTION APPARATUS AND SELF-PROPELLED DEVICE", the content of which is incorporated herein by reference in its entirety.

### TECHNICAL FIELD

The present disclosure relates to the field of smart home technologies, and in particular, to a distance detection apparatus and a self-propelled device.

### BACKGROUND

With the development and iteration of technologies, mobile robots such as smart home cleaning robots, commercial cleaning robots, and other service robots have been widely used in scenarios such as commercial places, homes, and industrial factories. In many application scenarios, mobile robots need to achieve a function of traveling along a wall to ensure a good cleaning effect.

### SUMMARY

A series of simplified concepts are introduced in the SUMMARY section, which will be further described in detail in the DETAILED DESCRIPTION section below. This section of the present disclosure is not intended to attempt to define key features and essential technical features of the claimed technical solutions, nor is it intended to attempt to delineate the protection scope of the claimed technical solutions.

One embodiment of a first aspect of the present disclosure provides a distance detection apparatus, which should be configured for a self-propelled device. The distance detection apparatus includes: an emitting light source, a receiving lens, a detection assembly, and a controller, the receiving lens and the emitting light source being space apart from each other, the detection assembly being located near a focal plane of the receiving lens, the emitting light source being configured to emit probe light with a divergence angle to a target object, and the detection assembly being configured to receive reflected light information passing through the receiving lens and reflected by the target object; and the controller being electrically connected to the detection assembly, and the controller being configured to determine a measured distance of the target object according to the reflected light information received by the detection assembly.

Further, the detection assembly includes one or at least two photosensitive surfaces, and the controller is configured to determine the measured distance of the target object according to reflected light information received by the photosensitive surfaces.

Further, there is one or at least two emitting light sources, and each emitting light source has a different emission direction; and
the controller is configured to determine the measured distance of the target object according to the reflected light information received by the photosensitive surfaces, including: the controller being configured to determine the measured distance of the target object according to the reflected light information from the same emitting light source received by the photosensitive surfaces.

Further, there are at least two emitting light sources, the controller is further connected to the emitting light sources to control an on-state and an off-state of the emitting light sources, and the controller is further configured to control one emitting light source to be in the on-state at the same moment.

Further, the photosensitive surface is disposed opposite to a light-emergent side of the receiving lens, the reflected light information includes energy values of light spots from the same emitting light source distributed on the photosensitive surface, the energy values of the light spots on the photosensitive surface are associated with the measured distance, and the energy values of the light spots on the photosensitive surface are associated with a position and/or an area of a distribution map of the light spots on the photosensitive surface, where the controller being configured to determine the measured distance of the target object according to the reflected light information from the same emitting light source received by the photosensitive surfaces includes: the controller determining a distance of the target object according to energy values of light spots on the photosensitive surfaces.

Further, the detection assembly includes two photosensitive surfaces, and energy values of light spots on the two photosensitive surfaces are I1 and I2, respectively; and the controller determining the distance of the target object according to the energy values of the light spots on the photosensitive surfaces includes:
the controller determining the measured distance according to a formula I1/I2; or
the controller determining the measured distance according to a formula I12/I22; or
the controller determining the measured distance according to a formula (I1+I2)/(I1-I2); or
the controller determining the measured distance according to a formula (I1-I2)/(I1+I2).

Further, each emitting light source includes a luminous body and a collimating lens, and the collimating lens is located on an emission optical path of the luminous body and is configured to change an emission angle of the luminous body.

Further, the luminous body includes at least one of a light-emitting diode, a semiconductor laser light source, and a vertical-cavity surface-emitting laser; and the detection assembly includes at least one of a silicon-based detector, an avalanche photo diode, and a CMOS camera.

Further, the detection assembly is disposed parallel to or obliquely to the focal plane of the receiving lens; and the detection assembly is located in front of or behind the focal plane of the receiving lens.

Further, an inclination angle between each emitting light source and the receiving lens is adjustable.

Further, the distance detection apparatus also includes a light filter, the light filter being disposed between the detection assembly and the receiving lens, or the light filter being located on a light-incident side of the receiving lens.

In a second aspect of the present disclosure, a self-propelled device is provided, which includes: a machine body, and the distance detection apparatus according to any one of the first aspect, the distance detection apparatus being disposed on the machine body.

Further, the number of the distance detection apparatuses is at least one.

In the distance detection apparatus and the self-propelled device according to the present disclosure, the distance detection apparatus includes an emitting light source, a receiving lens, a detection assembly, and a controller. The arrangement of the emitting light source, the receiving lens, and the detection assembly is similar to the arrangement of various components in an oblique optical path diagram in a triangulation ranging method. Therefore, based on the same principle as the triangulation ranging method, the controller can determine the measured distance of the target object according to the reflected light information received by the detection assembly, so as to achieve a ranging function, thereby enabling the self-propelled device to travel along the wall to ensure a good cleaning effect and an accurate obstacle avoidance operation. The distance detection apparatus features low-cost components and a simple structure, and is easy to assemble and debug, making it suitable for mass production, popularization and application.

The above description is only an overview of the technical solutions according to the present disclosure. In order to more clearly understand the technical means of the present disclosure to enable implementation in accordance with the content of this specification and to make the above and other purposes, features, and advantages of the present disclosure more obvious and easier to understand, the detailed description of the embodiments of the present disclosure is provided below.

### BRIEF DESCRIPTION OF DRAWINGS

The following drawings of the present disclosure are used herein as part of embodiments of the present disclosure for understanding the present disclosure. The embodiments of the present disclosure and descriptions thereof are shown in the drawings to explain the principles of the present disclosure. In the drawings:
FIG. 1 is a schematic structural diagram of a self-propelled device according to an optional embodiment of the present disclosure;
FIG. 2 is a schematic structural diagram of the embodiment shown in FIG. 1 from one perspective;
FIG. 3 is a schematic diagram of arrangement of a distance detection apparatus according to an optional embodiment of the present disclosure;
FIG. 4 is a schematic diagram of energy distribution of a light spot received by a detection assembly at a first measured distance according to an optional embodiment of the present disclosure;
FIG. 5 is a schematic diagram of energy distribution of a light spot received by a detection assembly at a second measured distance according to an optional embodiment of the present disclosure; and
FIG. 6 is a schematic diagram of an optical path of a triangulation ranging method according to an optional embodiment.

### Description of reference numerals

100 self-propelled device, 110 machine body, 111 forward portion, 112 rearward portion, 120 sensing system, 121 position determining apparatus, 122 buffer, 130 driving system, 131 main driving wheel assembly, 132 driven wheel, 140 cleaning system, 141 dry cleaning system, 142 wet cleaning system, 143 side brush, 160 power system, 170 human-machine interaction system, 200 distance detection apparatus, 210 emitting light source, 220 receiving lens, 230 detection assembly, 231 first photosensitive surface, 232 second photosensitive surface, 300 target object, 310 laser head, 320 camera.

### DETAILED DESCRIPTION

In the following description, numerous specific details are set forth to provide a more thorough understanding of the technical solutions according to the present disclosure. However, it will be apparent to those skilled in the art that the technical solutions according to the present disclosure may be implemented without one or more of these details.

It should be noted that the terms used herein are only for the purpose of describing specific embodiments, and are not intended to limit exemplary embodiments according to the present disclosure. As used herein, the singular forms are intended to include the plural forms as well, unless the context clearly indicates otherwise. In addition, it should be further understood that the terms "comprise" and/or "include" as used in the specification indicate the presence of the stated features, integers, steps, operations, elements, and/or assemblies, but do not exclude the presence or addition of one or more other features, integers, steps, operations, elements, assemblies, and/or combinations thereof.

Exemplary embodiments according to the present disclosure will now be described in more detail with reference to the drawings. However, these exemplary embodiments may be implemented in various forms and should not be construed as being limited to the embodiments set forth herein. It should be understood that these embodiments are provided to make the disclosure of the present disclosure thorough and complete, and to fully convey the concepts of these exemplary embodiments to those of ordinary skill in the art.

One embodiment of the present disclosure provides a possible application scenario. The application scenario includes a self-propelled device 100. Specifically, the self-propelled device 100 includes a self-moving cleaning device. For example, the self-propelled device 100 may be a sweeping robot, a mopping robot, a sweeping and mopping integrated robot, or the like. It can be understood that the self-propelled device 100 may also be other devices that meet the requirements. In the embodiment of the present disclosure, the self-propelled device 100 being a self-moving cleaning robot is used as an example for description. The self-propelled device 100 is generally controlled by a main body unit button, an APP, or the like to travel on a predetermined cleaning path, thereby performing corresponding functional operations.

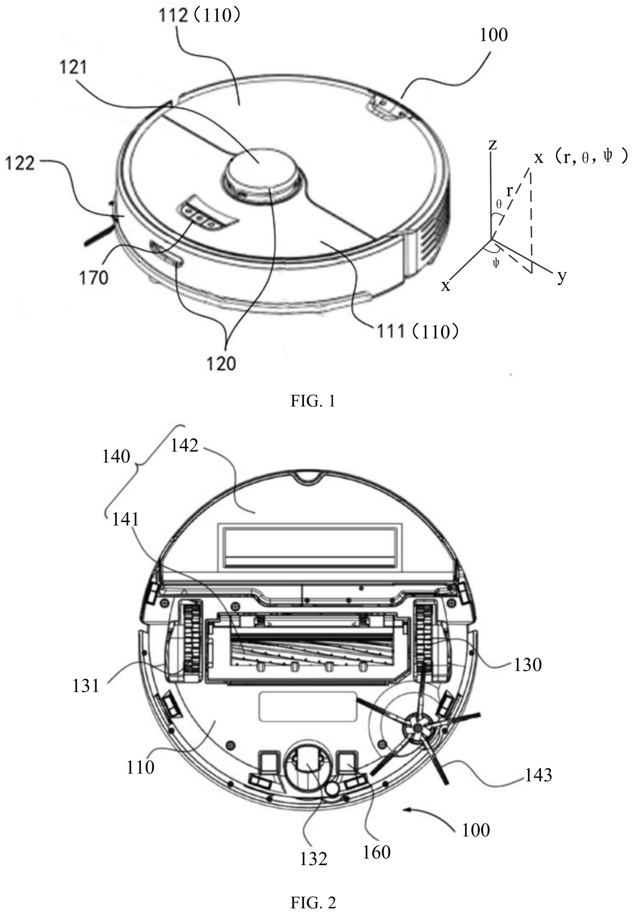

Further, as shown in FIGs. 1 and 2, the self-propelled device 100 may include a machine body 110, a sensing system 120, a control module, a driving system 130, a cleaning system 140, a power system 160, and a human-machine interaction system 170.

As shown in FIG. 1, the machine body 110 includes a forward portion 111 and a rearward portion 112, which have an approximately circular shape (both front and rear being circular), and may also have other shapes, including but not limited to an approximately D shape with a rectangular front and a circular rear, and a rectangular or square shape with a rectangular or square front and a rectangular or square rear.

As shown in FIGs. 1 and 2, the sensing system 120 includes a position determining apparatus 121 located on the machine body 110, a collision sensor and a proximity sensor that are disposed on a buffer 122 of the forward portion 111 of the machine body 110, a cliff sensor disposed on a lower part of the machine body 110, and a sensing apparatus such as a magnetometer, an accelerometer, a gyroscope, and an odometer disposed inside the machine body 110, and is configured to provide various position information and movement state information of the machine to the control module. The position determining apparatus 121 includes, but is not limited to, a camera 320 and a laser distance sensor (LDS).

As shown in FIG. 2, the forward portion 111 of the machine body 110 may carry a buffer 122. During the cleaning process, when the driving system 130 propels the self-propelled device 100 to travel on the ground, the buffer 122 detects one or more events in a travel path of the self-propelled device 100 via a sensor system, such as an infrared sensor, disposed on the buffer. The self-propelled device 100 may control, based on the events detected by the buffer 122, such as an obstacle or a wall, the driving system 130 to cause the self-propelled device 100 to respond to the events, such as performing an obstacle avoidance operation to move away from the obstacle.

The control module is disposed on a main circuit board in the machine body 110, and includes a computing processor, such as a central processing unit or an application processor, that communicates with a non-transitory memory, such as a hard disk, a flash memory, or a random access memory. The application processor draws a real-time map of an environment in which the self-propelled device 100 is located by using a positioning algorithm, such as simultaneous localization and mapping (SLAM) based on the obstacle information fed back by the laser distance sensor. In addition, with reference to distance information and speed information that are fed back by sensing apparatuses such as the sensor, the cliff sensor, the magnetometer, the accelerometer, the gyroscope, and the odometer disposed on the buffer 122, the current working state and position of the self-propelled device 100 can be comprehensively determined, as well as the current pose of the self-propelled device 100, such as negotiating a doorsill, getting onto a carpet, being located at a cliff, being stuck from above or below, having a full dust box, or being picked up. In addition, a specific strategy for a next action is given for different cases, so as to improve the cleaning performance and user experience of the self-propelled device 100.

As shown in FIG. 1, the driving system 130 may steer the machine body 110 to run across the ground based on driving commands with distance and angle information (e.g., x, y, and θ components). The driving system 130 includes a main driving wheel assembly 131. The main driving wheel assembly 131 may simultaneously control a left wheel and a right wheel. In order to control the movement of the machine more accurately, the main driving wheel assembly 131 may include a left driving wheel assembly and a right driving wheel assembly, respectively. The left driving wheel assembly and the right driving wheel assembly are disposed along a transverse axis defined by the machine body 110. In order to enable the self-propelled device 100 to move more stably on the ground or to have a stronger movement ability, the self-propelled device 100 may include one or more driven wheels 132. The driven wheels 132 include, but are not limited to, universal wheels. The main driving wheel assembly 131 includes a traveling wheel, a drive motor, and a control circuit for controlling the drive motor. The main driving wheel assembly 131 may be further connected to a circuit for measuring a driving current and an odometer. The driving wheel may be provided with a biased drop suspension system that is movably secured, such as rotatably attached, to the machine body 110, and receives a spring bias that is biased downward and away from the machine body 110. The spring bias allows the driving wheel to maintain contact and traction with the ground with certain ground grip, while a cleaning element of the self-propelled device 100 is also in contact with the ground with a certain pressure.

The power system 160 includes a rechargeable battery, for example, a nickel-hydrogen battery and a lithium battery. The rechargeable battery may be connected to a charging control circuit, a battery pack charging temperature detection circuit, and a battery undervoltage monitoring circuit. The charging control circuit, the battery pack charging temperature detection circuit, and the battery undervoltage monitoring circuit are then connected to a single-chip microcomputer control circuit. The main body unit is charged through connection to a charging pile via charging electrodes arranged on the side or bottom of the machine body.

The human-machine interaction system 170 includes a button on a main body unit panel for a user to select a function, and may also include a display screen and/or an indicator light and/or a speaker, where the display screen, the indicator light, and the speaker show a current state of the machine or function options to the user, and may also include a mobile phone client program. For a path navigation type self-propelled device 100, a mobile phone client may show a map of an environment in which the device is located and a location of the machine to the user, providing the user with richer and more user-friendly function options.

The cleaning system 140 may be a dry cleaning system 141 and/or a wet cleaning system 142.

As shown in FIG. 2, the dry cleaning system 141 according to one embodiment of the present disclosure may include a roller brush, a dust box, a fan, and an air outlet. The roller brush with certain interference with the ground sweeps up garbage on the ground and rolls up the garbage to the front of a dust suction inlet between the roller brush and the dust box, and then the garbage is sucked into the dust box by the suction gas generated by the fan and passing through the dust box. The dry cleaning system 141 may also include a side brush 143 with a rotation shaft that is angled relative to the ground to move debris into the roller brush region of the cleaning system 140.

As shown in FIG. 2, the wet cleaning system 142 according to the embodiment of the present disclosure may include: a cleaning head, a driving unit, a water supply mechanism, a liquid storage tank, and the like. The cleaning head may be disposed below the liquid storage tank, and the cleaning solution inside the liquid storage tank is delivered to the cleaning head through the water supply mechanism, such that the cleaning head performs wet cleaning on a plane to be cleaned. In other embodiments of the present disclosure, the cleaning solution inside the liquid storage tank may also be directly sprayed onto the suface to be cleaned, and the cleaning head cleans the surface by evenly applying the cleaning solution.

The cleaning head is configured to clean a surface to be cleaned. The driving unit is configured to drive the cleaning head to substantially reciprocate along a target surface. The target surface is a part of the surface to be cleaned. The cleaning head reciprocates along the surface to be cleaned. A surface of the cleaning head in contact with the surface to be cleaned is provided with a cleaning cloth or a cleaning plate, which generates high-frequency friction with the surface to be cleaned through reciprocating, thereby removing stains on the surface to be cleaned.

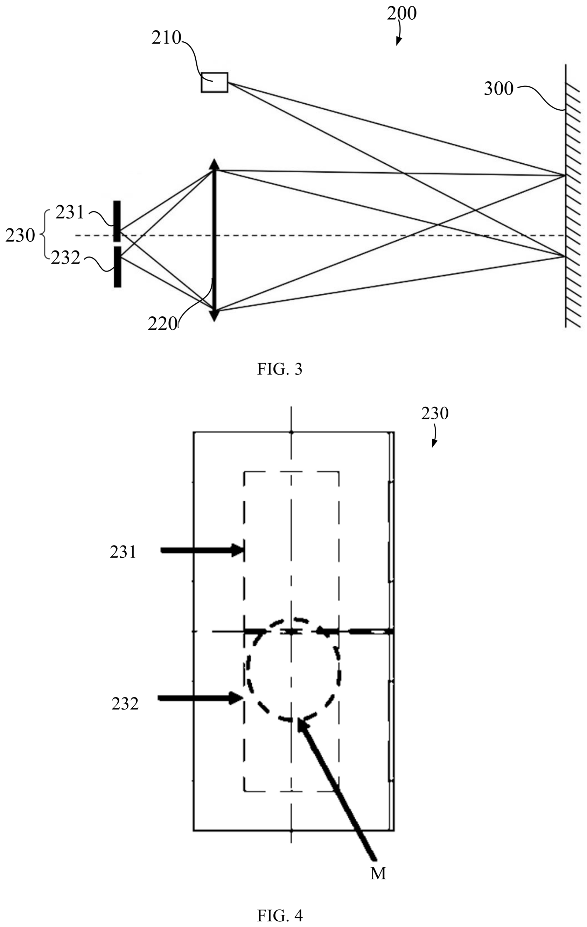

As shown in FIG. 3, the present disclosure provides a distance detection apparatus 200 applied to a self-propelled apparatus. The distance detection apparatus 200 includes: an emitting light source 210, a receiving lens 220, a detection assembly 230, and a controller. The receiving lens 220 and the emitting light source 210 are space apart from each other, the detection assembly 230 is located near a focal plane of the receiving lens 220, the emitting light source 210 is configured to emit probe light with a divergence angle to a target object 300, and the detection assembly 230 is configured to receive reflected light information passing through the receiving lens 220 and reflected by the target object 300; and the controller is electrically connected to the detection assembly 230, and the controller is configured to determine a measured distance of the target object 300 according to the reflected light information received by the detection assembly 230.

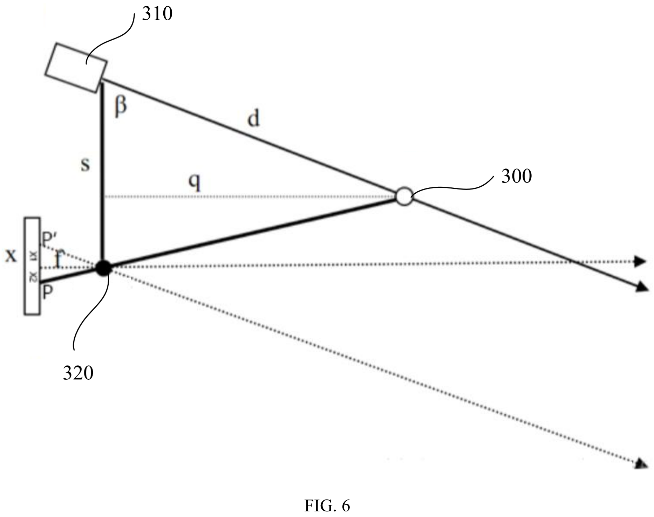

In this embodiment, the arrangements of the emitting light source 210, the receiving lens 220, and the detection assembly 230 are similar to the arrangements of the components in the oblique optical path diagram in a triangulation ranging method. As shown in FIG. 6, a single-point laser is used as an example to describe the oblique optical path in the triangulation ranging method.

As shown in FIG. 6, a laser head 310 and a camera 320 are on the same horizontal line (referred to as a reference line), with a distance s therebetween. The focal length of the camera 320 is f, and the included angle between the laser head 310 and the reference line is β. It is assumed that a position at which the target object 300 is reflected back to an imaging plane of the camera 320 under irradiation of a point laser is a point P. Based on geometric knowledge, a similar triangle can be formed. The triangle formed by the laser head 310, the camera 320, and the target object 300 is similar to the triangle formed by the camera 320, the imaging point P, and an auxiliary point P'. Let PP' = x, with q and d defined as shown in FIG. 6. From the similar triangles, f/x = q/s, which yields q = fs/x, where x = x1 + x2 = f/tanβ + pixelSize × position, in which pixelSize denotes the size of a pixel unit, and position denotes the position of the imaging pixel coordinate relative to an imaging center. Finally, a distance d can be calculated as: d = q/sinβ.

In this embodiment, positions of the emitting light source 210 and the receiving lens 220 match positions of the laser head 310 and the camera 320; that is, the emitting light source 210 and the receiving lens 220 are arranged at a certain interval and at an angle, such that the emitting light source 210 and the receiving lens 220 are space apart from each other, and the detection assembly 230 is located near the focal plane of the receiving lens 220. The emitting light source 210 emits probe light to the target object 300. The probe light, after being reflected by the target object 300, is received by the detection assembly 230 via the receiving lens 220, such that the detection assembly 230 can receive reflected light information passing through the receiving lens 220 and reflected by the target object 300. Since the light emitted by the emitting light source 210 has a divergence angle, the detection assembly 230 can receive the reflected light information reflected by the target object 300 within a preset ranging range, and as the preset ranging changes, the reflected light information received by the detection assembly 230 may also change accordingly. Therefore, based on the same principle as the triangulation ranging method, the controller can determine the measured distance of the target object 300 according to the reflected light information received by the detection assembly 230, so as to achieve a ranging function. Therefore, the distance detection apparatus 200 can be used to detect an obstacle near the self-propelled device 100, such that the self-propelled device 100 achieves a function of traveling along the wall, or the proximity sensor cooperates with other sensors, thereby enabling the self-propelled device 100 to travel along the wall to ensure a good cleaning effect and an accurate obstacle avoidance operation.

In some possible embodiments according to the present disclosure, the detection assembly 230 includes one or at least two photosensitive surfaces, and the controller is configured to determine the measured distance of the target object according to the reflected light information received by the photosensitive surfaces.

When the detection assembly 230 includes a photosensitive surface, based on the principle of the triangulation ranging method, the controller can determine the measured distance of the target object 300 according to the reflected light information received by the photosensitive surface, so as to achieve the ranging function. The distance detection apparatus 200 features low-cost components and a simple structure, and is easy to assemble and debug, making it suitable for mass production, popularization, and application.

When the detection assembly 230 includes at least two photosensitive surfaces, each photosensitive surface can receive the reflected light information reflected by the target object 300 within the preset ranging range, and as the preset ranging changes, the reflected light information received by each photosensitive surface may also change accordingly. Therefore, based on the same principle as the triangulation ranging method, the controller can determine the measured distance of the target object 300 according to the reflected light information received by the photosensitive surfaces, so as to achieve the ranging function. The distance detection apparatus 200 features low-cost components and a simple structure, and is easy to assemble and debug, making it suitable for mass production, popularization, and application.

In addition, the self-propelled device in the related art generally uses an infrared emitting diode and an infrared receiving triode as a transceiver to determine the distance between the self-propelled device and the target object to achieve traveling along the wall. In the above distance detection apparatus, since the infrared receiving triode generally has a light sensing surface, when the self-propelled device encounters a scenario in which the target object is made of a special material (such as a mirror surface, glass, a baseboard with a special smooth surface, or the like), the problem of misjudgment of the distance occurs easily, and the accuracy along the wall is poor.

In the distance detection apparatus 200 according to the present disclosure, in the case that the detection assembly 230 includes at least two photosensitive surfaces, since the reflected light reflected by the target object 300 is received by the detection assembly 230 after passing through the receiving lens 220, the detection assembly including at least two photosensitive surfaces increases the area for the detection assembly 230 to receive the reflected light compared with an infrared receiving triode including one photosensitive surface in the related art. Therefore, the size of the receiving lens 220 and the number of the photosensitive surfaces in the detection assembly 230 are reasonably set. For example, the size of the receiving lens 220 is set to be large enough, and the number of the photosensitive surfaces is reasonably set such that the detection assembly 230 has a sufficient receiving area to receive the reflected light. In this way, the problem of detection failure caused by large-angle returned light due to non-Lambertian scattering of a mirror surface, glass, and a baseboard with a special smooth surface, can be effectively avoided, thereby ensuring the ranging accuracy. In addition, when the scattering characteristic of the surface of the target object 300 changes, the ranging performance is relatively stable, which is beneficial to improving the accuracy of the self-propelled device 100 along the wall.

Further, the number of photosensitive surfaces in the detection assembly 230 may be two, three, four, or the like. The number of photosensitive surfaces in the detection assembly 230 is reasonably set to ensure that the detection assembly 230 has a large reflected light receiving area, thereby avoiding the problem of detection failure caused by large-angle returned light due to non-Lambertian scattering, and ensuring the ranging accuracy. It should be noted that the at least two photosensitive surfaces may be located on the same detector, or may be distributed on different detectors, which is not specifically described in the present disclosure.

It can be understood that when there is no target object made of a special material (such as a mirror surface, glass, or a baseboard with a special smooth surface) in the application scenario of the self-propelled device 100, the detection assembly 230 may include only one photosensitive surface, such that accurate ranging can still be achieved, and the manufacturing cost of the distance detection apparatus 200 can be reduced.

Therefore, the number of photosensitive surfaces may be reasonably set according to the material condition of the target object in the application scenario of the self-propelled device 100 to ensure that the distance detection apparatus 200 can achieve accurate ranging, and the cleaning effect and the obstacle avoidance accuracy of the self-propelled device are improved.

Further, as shown in FIG. 3, the detection assembly 230 is located on the light-emergent side of the receiving lens 220; that is, the receiving lens 220 is located on the light-incident side of the detection assembly 230. The receiving lens 220 may have a certain converging effect, and after the reflected light with a large radiation area reflected by the target object 300 is converged by the receiving lens 220, the reflected light is irradiated to the detection assembly 230 with a small radiation area. Therefore, the volume of the detection assembly 230 can be reduced as much as possible and the cost of the distance detection apparatus 200 can be reduced while ensuring that the detection assembly 230 can completely and reliably receive the reflected light information reflected by the target object 300 to ensure the ranging accuracy. In addition, in the distance detection apparatus according to the present disclosure, the use of one receiving lens 220 in cooperation with the detection assembly 230 enables ranging with a field of view greater than 110°, thereby reducing the complexity of the optical design. Specifically, the receiving lens 220 may be a convex lens, or the receiving lens 220 may be a combination of a convex lens and a concave lens or other lenses.

In some possible embodiments according to the present disclosure, there is one or at least two emitting light sources 210, and each emitting light source 210 has a different emission direction. The controller is configured to determine the measured distance of the target object 300 according to the reflected light information received by the photosensitive surfaces, which includes: the controller being configured to determine the measured distance of the target object 300 according to the reflected light information from the same emitting light source 210 received by the photosensitive surfaces.

In this embodiment, since light emitted by each emitting light source 210 has an emission angle, each emitting light source 210 has a different emission direction, and the reflected light information from the same emitting light source 210 received by each photosensitive surface changes with the preset distance of the target object 300. Therefore, the controller can determine the measured distance of the target object 300 projected by the emitting light source 210 according to the reflected light information from the same emitting light source 210 received by the photosensitive surfaces. Therefore, the number of the emitting light sources 210 and the positions of the emitting light sources 210 may be reasonably set according to the detection range and the detection requirements of the distance detection apparatus 200 to satisfy the distance measurement of the target object 300 in different directions and different positions.

Specifically, the number of the emitting light sources 210 may be one, or the number of the emitting light sources 210 may be two, three, four, or the like. It can be understood that the detection assembly 230 may include one photosensitive surface or at least two photosensitive surfaces. That is, the distance detection apparatus 200 may include one photosensitive surface and one emitting light source 210, or the distance detection apparatus 200 may include two photosensitive surfaces and one emitting light source 210, or the distance detection apparatus 200 may include other numbers (three, four, five, or the like) of photosensitive surfaces and one emitting light source, or the distance detection apparatus 200 may include one photosensitive surface and two emitting light sources 210, or the distance detection apparatus 200 may include one photosensitive surface and other numbers (three, four, five, or the like) of emitting light sources 210.

Specifically, when the number of the emitting light sources 210 is greater than or equal to two, and the number of the photosensitive surfaces is greater than or equal to two, the controller may determine the measured distance of the target object 300 according to the reflected light information from the same emitting light source 210 received by the photosensitive surfaces. That is, each emitting light source 210 and the detection assembly 230 form a distance detection apparatus 200. Since each emitting light source 210 has a different emission angle, the distance measurement of the target object 300 in different directions and at different positions can be achieved. Compared with the related art in which the detection assembly can only achieve ranging in a single direction, which causes the target object beyond the direction to collide with the machine body easily, the detection range and the detection direction are expanded, and multi-directional obstacle detection may be achieved for the self-propelled device 100, so as to improve the obstacle avoidance performance of the self-propelled device 100 and make it suitable for popularization and application. In addition, each emitting light source 210 and the detection assembly 230 that includes at least two photosensitive surfaces form a distance detection apparatus 200. The distance detection apparatus 200 formed by a plurality of emitting light sources 210 and the same detection assembly 230 achieves multi-directional distance measurement of the target object 300, and achieves multiplexing of the detection assembly 230, such that the entire distance detection apparatus 200 features a simple structure form, and is easy to assemble and debug, making it convenient for mass production and suitable for popularization and application. Moreover, the distance detection apparatus 200 can effectively avoid the problem of detection failure caused by large-angle returned light due to non-Lambertian scattering of a mirror surface, glass, and a baseboard with a special smooth surface, thereby ensuring the ranging accuracy. In addition, when the scattering characteristic of the surface of the target object 300 changes, the ranging performance is relatively stable, which is beneficial to improving the accuracy of the self-propelled device 100 along the wall.

In some possible embodiments according to the present disclosure, there are at least two emitting light sources 210, the controller is also connected to the emitting light sources 210 to control an on-state and an off-state of the emitting light sources 210, and the controller is also configured to control one emitting light source 210 to be in the on-state at the same moment.

For example, the emitting light source 210 includes a first emitting light source, a second emitting light source, a third emitting light source, and the like. The controller controls the first emitting light source 210 to be in an on-state and the other emitting light sources 210 to be in an off-state at a first moment. In this case, the controller can determine the measured distance of the target object 300 irradiated by the first emitting light source 210 according to the reflected light information of the first emitting light source 210 received by the photosensitive surfaces. The controller controls the second emitting light source 210 to be in an on-state and the other emitting light sources 210 to be in an off-state at a second moment. In this case, the controller can determine the measured distance of the target object 300 irradiated by the second emitting light source 210 according to the reflected light information of the second emitting light source 210 received by the photosensitive surfaces. The controller controls the third emitting light source 210 to be in an on-state and the other emitting light sources 210 to be in an off-state at the third moment. In this case, the controller can determine the measured distance of the target object 300 irradiated by the third emitting light source 210 according to the reflected light information of the third emitting light source 210 received by the photosensitive surfaces. By analogy, the controller controls only one emitting light source 210 to be in an on-state at the same moment, and sequentially controls the emitting light sources to be in an on-state at different moments according to a certain time sequence, so as to achieve the measured distance of the target object 300 irradiated by the emitting light source 210. It can be understood that, at a certain moment, the controller may control the first emitting light source 210 to be in the on-state and the other emitting light sources 210 to be in the off-state again. At a next moment, the controller controls the second emitting light source 210 to be in the on-state and the other emitting light sources 210 to be in the off-state. By analogy, the emitting light sources 210 may be controlled to be individually turned on according to a time sequence to achieve the distance measurement of different target objects 300.

Therefore, the use of the plurality of emitting light sources 210 to cooperate with the same detection assembly 230 enables the distance measurement of the target object 300 in different directions in different time periods, thereby enhancing the detection function, and expanding the detection range and the detection direction of the distance detection apparatus 200. In addition, ranging can be performed on obstacles around the self-propelled device 100 in a plurality of directions at different time periods to improve the obstacle avoidance performance of the self-propelled device, and improve the reliability and accuracy of the working and movement of the self-propelled device 100. Further, when the distance detection apparatus 200 includes a plurality of emitting light sources 210, the plurality of emitting light sources 210 may be sequentially distributed in a vertical direction, or the plurality of emitting light sources 210 may be sequentially distributed in a horizontal direction, or the plurality of emitting light sources 210 may be sequentially distributed in other directions that meet the requirements, so as to achieve distance measurement of the target object 300 at different positions in the direction. It can be understood that, in this case, the detection assembly 230 may include one photosensitive surface or at least two photosensitive surfaces. When the detection assembly 230 includes at least two photosensitive surfaces, the distance detection apparatus 200 corresponding to the detection assembly can effectively avoid the problem of detection failure caused by large-angle returned light due to non-Lambertian scattering of a mirror surface, glass, and a baseboard with a special smooth surface, and ensure the ranging accuracy.

For example, taking the plurality of emitting light sources 210 being sequentially distributed in the vertical direction as an example, the plurality of emitting light sources 210 may be sequentially arranged on the machine body 110 in a straight line in the vertical direction, or the plurality of emitting light sources 210 may be sequentially arranged on the machine body 110 in a curved line in the vertical direction. The on-state of the plurality of emitting light sources 210 is reasonably set, and the computer program is used, such that obstacles in the vertical direction can be comprehensively detected in a process of the self-propelled device 100 traveling along the wall, thereby improving the accuracy of obstacle avoidance of the self-propelled device 100. Specifically, in an actual application scenario, some cabinets do not directly rest on the floor but are provided with a certain gap at the bottom. Therefore, the plurality of emitting light sources 210 are sequentially distributed on the self-propelled device 100 in the vertical direction. According to a certain sequence and time, only one emitting light source 210 is controlled to be in the on-state at the same moment. The emitting light sources 210 are sequentially controlled to be in the on-state at different moments. The use of the emitting light source 210 in the on-state to cooperate with the detection assembly 230 achieves the distance measurement of the target object 300 at a relative position, thereby enabling the distance measurement of the target object 300 at a plurality of positions relative to the self-propelled device 100 in the vertical direction; that is, the distance of the cabinet relative to the self-propelled device 100 can be detected, and the gap below the cabinet can also be detected, thereby facilitating the self-propelled device 100 reasonably performing an obstacle avoidance operation.

For example, taking the plurality of emitting light sources 210 being sequentially distributed in the horizontal direction as an example, the plurality of emitting light sources 210 may be sequentially arranged on the machine body 110 in a straight line in the horizontal direction, or the plurality of emitting light sources 210 may be sequentially arranged on the machine body 110 in a curved line in the horizontal direction. Specifically, for example, two emitting light sources 210 are oppositely arranged on a left side and a right side of the machine body 110, and therefore, according to a certain time sequence, only one emitting light source 210 is controlled to be in the on-state at the same moment, and the emitting light sources 210 are sequentially controlled to be in the on-state at different moments, thereby enabling distance detection of the target objects 300 on different sides of the self-propelled device 100 in different time periods according to the specific operating state of the self-propelled device 100, expanding the detection range, and simplifying the overall structure of the distance detection apparatus 200. It can be understood that, in this case, the detection assembly 230 may include one photosensitive surface or at least two photosensitive surfaces.

As shown in FIG. 3, in some possible embodiments according to the present disclosure, the photosensitive surface is disposed opposite to the light-emergent side of the receiving lens 220. The reflected light information includes energy values of light spots from the same emitting light source 210 distributed on the photosensitive surface. The energy values of the light spots on the photosensitive surface are associated with the measured distance. The energy values of the light spots on the photosensitive surface are associated with a position and/or an area of a distribution map of the light spots on the photosensitive surface.

The photosensitive surface can receive the reflected light; that is, the photosensitive surface faces the receiving lens 220. The reflected light information includes the energy values of the light spots from the same emitting light source 210 distributed on the photosensitive surface. It can be understood that there is energy distribution of the light spot reflected by the target object 300 within a preset ranging range on the photosensitive surface, and as the distance changes, the energy distribution on the photosensitive surface also changes. For example, at different measured distances, a position and/or an area of a distribution map of the light spots on the photosensitive surfaces may change, such that the energy values of the light spots on the photosensitive surfaces also change with different measured distances. Therefore, the controller can determine the distance of the target object 300 according to the energy values of the light spots on the photosensitive surfaces. It can be understood that the target object 300 is a target object 300 irradiated by the emitting light source 210 in the on-state.

Specifically, the relevant parameters and positions of each emitting light source 210, the receiving lens 220, and the photosensitive surface in the distance detection apparatus 200 need to be reasonably designed, including the divergence angle and the power of each emitting light source 210, the aperture and the focal length of the receiving lens 220, the distance and the angle between the emitting light source 210 and the receiving lens 220, and the position of the photosensitive surface, such that there is a certain energy distribution of the light spots of the reflected light within the preset ranging range on the photosensitive surfaces, and the receiving efficiency is also ensured.

As shown in FIGs. 3, 4, and 5, in some possible embodiments according to the present disclosure, the number of photosensitive surfaces is two. For example, the two photosensitive surfaces are a first photosensitive surface 231 and a second photosensitive surface 232, respectively. The energy value of the light spot on the first photosensitive surface 231 is I1, and the energy value of the light spot on the second photosensitive surface 232 is I2. It can be understood that at different measured distances, the energy value I1 of the light spot on the first photosensitive surface 231 may be different, and the energy value I2 of the light spot on the second photosensitive surface 232 may also be different.

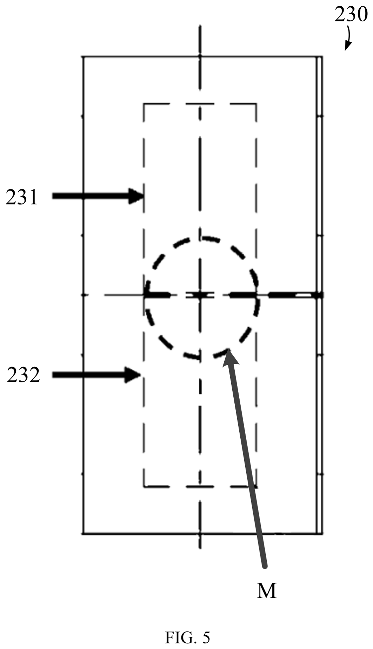

Taking the detection assembly 230 including two photosensitive surfaces as an example, the following distribution of light spots is achieved through reasonable design: When the measured distance of the target object 300 is close, as shown in FIG. 4, after the light reflected by the target object 300 passes through the receiving lens 220, most of the light spots of the reflected light are distributed on the second photosensitive surface 232, and a smaller part of the light spots of the reflected light are distributed on the first photosensitive surface 231; and when the measured distance of the target object 300 increases, as shown in FIG. 5, the light spots of the reflected light move upward along the focal plane of the receiving lens 220, and the energy distribution of the light spots received by the first photosensitive surface 231 and the second photosensitive surface 232 also changes accordingly. For example, the light spots distributed on the photosensitive surfaces of the first photosensitive surface 231 and the second photosensitive surface 232 are similar. Therefore, the energy value of the light spot on each photosensitive surface is different, such that the controller can determine different measured distances according to the relationship between the energy values measured by two channels of the two photosensitive surfaces.

It should be noted that a mapping relationship between the relationship between the energy value I1 of the light spot on the first photosensitive surface 231 and the energy value I2 of the light spot on the second photosensitive surface 232 and the measured distance may be reasonably set by a control program to determine the measured distance.

In some possible embodiments according to the present disclosure, the controller determines the distance of the target object 300 according to the energy values of the light spots on the photosensitive surfaces, which includes: the controller determining the measured distance according to a formula I1/I2; or the controller determining the measured distance according to a formula I12/I22; or the controller determining the measured distance according to a formula (I1+I2)/(I1-I2); or the controller determining the measured distance according to a formula (I1-I2)/(I1+I2).

Therefore, the measured distance of the target object 300 can be determined according to the mapping relationship between the foregoing formulas and the measured distance of the target object 300. In addition, when different materials of the target object 300 are detected, the ratio in the foregoing formulas fluctuates slightly, which is beneficial to improving the ranging accuracy and improving the accuracy of the self-propelled device 100 along the wall.

In some possible embodiments according to the present disclosure, each emitting light source 210 includes a luminous body and a collimating lens, and the collimating lens is located on an emission optical path of the luminous body and is configured to change an emission angle of the luminous body.

The arrangement of the collimating lens can change the emission angle of the luminous body, thereby ensuring that the light emitted by the luminous body is irradiated on the target object 300, and the reflected light reflected by the target object 300 is completely received by the detection assembly 230 after passing through the receiving lens 220, avoiding the problem of detection failure caused by the fact that the detection assembly 230 is unable to receive the large-angle reflected light, and ensuring the ranging accuracy.

The luminous body includes at least one of a light-emitting diode, a semiconductor laser light source, and a vertical-cavity surface-emitting laser. It can be understood that the luminous body may also be another light-emitting structure that meets the requirements.

Specifically, the light-emitting diode may be a light-emitting diode (LED). The semiconductor laser light source may be an LD light source. The vertical-cavity surface-emitting laser may be a vertical-cavity surface-emitting laser (VCSEL) light source. A spectral range of light emitted by the luminous body may include an ultraviolet band, a visible band, and an infrared band.

The detection assembly may be a silicon-based detector, or the detection assembly may be an avalanche photo diode (APD), a position sensor, or a complementary metal oxide semiconductor (CMOS) camera. Specifically, when the detection assembly 230 includes two photosensitive surfaces, the detection assembly 230 may be a dual-silicon-based detector, such as a double-sided array silicon photomultiplier (SIPM), a dual photomultiplier, a dual APD array, or the like.

In some possible embodiments according to the present disclosure, the detection assembly 230 is disposed parallel to or obliquely to the focal plane of the receiving lens 220, such that the equal position of the detection assembly 230 and the focal plane of the receiving lens 220 may be reasonably adjusted according to the positions of the emitting light source 210 and the receiving lens 220 and the emission angle of the emitting light source 210, thereby ensuring that the light emitted by the luminous body is irradiated on the target object 300, and the reflected light reflected by the target object 300 is completely received by the detection assembly 230 after passing through the receiving lens 220, avoiding the problem of detection failure caused by the fact that the detection assembly 230 is unable to receive the large-angle reflected light, and ensuring the ranging accuracy.

Specifically, the detection assembly 230 may be located in front of or behind the focal plane of the receiving lens 220. It can be understood that the detection assembly 230 may also be located at the focal plane of the receiving lens 220 and at a position above or below the receiving lens 220 to ensure the comprehensiveness of the reflected light received in the detection interval and provide the ranging accuracy.

The inclination angle between each emitting light source 210 and the receiving lens 220 is adjustable. Therefore, the inclination angle between each emitting light source 210 and the receiving lens 220 may be reasonably adjusted according to the specific positions and parameters of each component, and the material of the target object 300, thereby ensuring that the light emitted by each luminous body is irradiated on the target object 300, and the reflected light reflected by the target object 300 is completely received by the detection assembly 230 after passing through the receiving lens 220, avoiding the problem of detection failure caused by the fact that the detection assembly 230 is unable to receive the large-angle reflected light, and improving the ranging accuracy.

In some possible embodiments according to the present disclosure, the distance detection apparatus 200 also includes a light filter. The light filter has a function of filtering stray light.

The light filter may be disposed between the detection assembly 230 and the receiving lens 220. Therefore, the light reflected by the target object 300 may be filtered by the light filter after passing through the receiving lens 220 to reduce stray light, and then irradiated to the detection assembly 230, thereby ensuring that the photosensitive surfaces of the detection assembly 230 can accurately and reliably receive the reflected light information of the target object 300, improving the accuracy of the energy value of the light spot on the photosensitive surface, and improving the ranging accuracy.

Alternatively, the light filter may be located on the light-incident side of the receiving lens 220; that is, the light filter and the detection assembly 230 are located on both sides of the receiving lens 220. Therefore, the light reflected by the target object 300 is filtered by the light filter to reduce stray light, and then irradiated to the receiving lens 220, and refracted to the detection assembly 230 through the receiving lens 220, thereby ensuring that the photosensitive surfaces of the photosensitive assembly can accurately and reliably receive the reflected light information of the target object 300, improving the accuracy of the energy value of the light spot on the photosensitive surface, and improving the ranging accuracy.

The present disclosure also provides a self-propelled device 100, which includes a machine body 110, and the distance detection apparatus 200 according to any one of the first aspect. The distance detection apparatus 200 is disposed on the machine body 110. Since the self-propelled device 100 includes the distance detection apparatus 200 according to any one of the above embodiments, the self-propelled device has all the technical effects of the distance detection apparatus 200 described above.

Specifically, the distance detection apparatus 200 according to the present disclosure may perform short-distance detection, and for example, may detect obstacles that are close to the self-propelled device 100, such that the self-propelled device 100 controls the self-propelled device 100 to travel along the wall according to a detection result of the distance detection apparatus 200.

Further, the number of the distance detection apparatuses 200 may be at least one. For example, the number of the distance detection apparatuses 200 may be one, two, three, or the like. The number and the structure of the distance detection apparatuses 200 may be reasonably set according to detection requirements, obstacle avoidance accuracy of the self-propelled device 100, and the like.

Specifically, the self-propelled device 100 may include one or more distance detection apparatuses 200 having one emitting light source 210, or the self-propelled device 100 may include one or more distance detection apparatuses 200 having a plurality of emitting light sources 210, or the distance detection apparatus 200 of the self-propelled device 100 includes both the distance detection apparatus 200 having one emitting light source 210 and the distance detection apparatus 200 having a plurality of emitting light sources 210; or the self-propelled device 100 may include one or more distance detection apparatuses 200 having one photosensitive surface, or the self-propelled device 100 may include one or more distance detection apparatuses 200 having a plurality of photosensitive surfaces, or the distance detection apparatus 200 of the self-propelled device 100 includes both the distance detection apparatus 200 having one photosensitive surface and the distance detection apparatus 200 having a plurality of photosensitive surfaces.

The present disclosure has been described with reference to the above embodiments. It should be understood that, however, the above embodiments are only for the purpose of illustration and description and are not intended to limit the present disclosure to the scope of the embodiments described. In addition, those skilled in the art can understand that the present disclosure is not limited to the above embodiments. More variations and modifications can be made according to the teachings of the present disclosure, and these variations and modifications all fall within the scope of protection of the present disclosure. The protection scope of the present disclosure is defined by the appended claims and their equivalents.

## Claims

1. A distance detection apparatus applied to a self-propelled device, wherein the distance detection apparatus comprises:
an emitting light source, a receiving lens, a detection assembly, and a controller, the receiving lens and the emitting light source being space apart from each other, the detection assembly being located near a focal plane of the receiving lens, the emitting light source being configured to emit probe light with a divergence angle to a target object, and the detection assembly being configured to receive reflected light information passing through the receiving lens and reflected by the target object; and
the controller being electrically connected to the detection assembly, and the controller being configured to determine a measured distance of the target object according to the reflected light information received by the assembly.

2. The distance detection apparatus according to claim 1, wherein
the detection assembly comprises one or at least two photosensitive surfaces, and the controller is configured to determine the measured distance of the target object according to reflected light information received by the photosensitive surfaces.

3. The distance detection apparatus according to claim 2, wherein
there is one or at least two emitting light sources, and each emitting light source has a different emission direction; and
the controller is configured to determine the measured distance of the target object according to the reflected light information received by the photosensitive surfaces, comprising:
the controller being configured to determine the measured distance of the target object according to reflected light information from a same emitting light source received by the photosensitive surfaces.

4. The distance detection apparatus according to claim 3, wherein
there are at least two emitting light sources, the controller is further connected to the emitting light sources to control an on-state and an off-state of the emitting light sources, and the controller is further configured to control one emitting light source to be in the on-state at a same moment.

5. The distance detection apparatus according to claim 3, wherein
the photosensitive surface is disposed opposite to a light-emergent side of the receiving lens,
the reflected light information comprises energy values of light spots from the same emitting light source distributed on the photosensitive surface, the energy values of the light spots on the photosensitive surface are associated with the measured distance, and the energy values of the light spots on the photosensitive surface are associated with a position and/or an area of a distribution map of the light spots on the photosensitive surface,
wherein the controller being configured to determine the measured distance of the target object according to the reflected light information from the same emitting light source received by the photosensitive surfaces comprises:
the controller determining a distance of the target object according to energy values of light spots on the photosensitive surfaces.

6. The distance detection apparatus according to claim 5, wherein
the detection assembly comprises two photosensitive surfaces, and energy values of light spots on the two photosensitive surfaces are I1 and I2, respectively; and
the controller determining the distance of the target object according to the energy values of the light spots on the photosensitive surfaces comprises:
the controller determining the measured distance according to a formula I1/I2; or
the controller determining the measured distance according to a formula I12/I22; or
the controller determining the measured distance according to a formula (I1+I2)/(I1-I2); or
the controller determining the measured distance according to a formula (I1-I2)/(I1+I2).

7. The distance detection apparatus according to claim 3, wherein
each emitting light source comprises a luminous body and a collimating lens, and the collimating lens is located on an emission optical path of the luminous body and is configured to change an emission angle of the luminous body.

8. The distance detection apparatus according to claim 7, wherein
the luminous body comprises at least one of a light-emitting diode, a semiconductor laser light source, and a vertical-cavity surface-emitting laser; and
the detection assembly comprises at least one of a silicon-based detector, an avalanche photo diode, and a CMOS camera.

9. The distance detection apparatus according to claim 1, wherein
the detection assembly is disposed parallel to or obliquely to the focal plane of the receiving lens; and
the detection assembly is located in front of or behind the focal plane of the receiving lens.

10. The distance detection apparatus according to claim 3, wherein
an inclination angle between each emitting light source and the receiving lens is adjustable.

11. The distance detection apparatus according to claim 1, wherein the distance detection apparatus also comprises:
a light filter, the light filter being disposed between the detection assembly and the receiving lens, or the light filter being located on a light-incident side of the receiving lens.

12. A self-propelled device, wherein, comprises:
a machine body, and the distance detection apparatus according to any one of claims 1 to 11, the distance detection apparatus being disposed on the machine body.

13. The self-propelled device according to claim 12, wherein
the number of the distance detection apparatuses is at least one.
